# EUROPEAN PATENT APPLICATION

(11) **EP 4 786 511 A1**
(43) Date of publication of application: **05.08.2026**
(21) Application number: 26156131.0
(22) Date of filing: 03.02.2026
(51) Int. Cl.: C08G 8/24, C08G 8/36, C08L 61/14

(54) **ARALKYL RESOLE POLYMER**

(30) Priority: 03.02.2025 GB 202501518
(71) Applicant: Jones, Paul, Wrightington WN6 9PS (GB)
(72) Inventor: Jones, Paul, Wrightington WN6 9PS (GB)
(74) Representative: Mathys & Squire

(57) **Abstract**

The present invention relates to an AB co-polymer or AB co-oligomer having a resole like structure. In particular the invention is directed to an AB co-polymer or AB co-oligomer, a method of preparing the AB co-polymer or AB co-oligomer, a composition comprising the AB co-polymer or AB co-oligomer, and uses thereof. In one aspect, the AB co-polymer or AB co-oligomer is derived from repeating units of A and B, wherein repeating unit A is independently selected from the following structures: 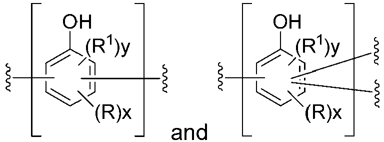 and wherein repeating unit B is independently selected from the following structures:

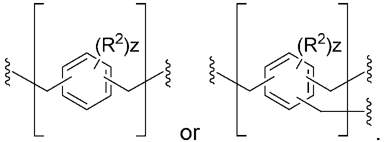

## Description

The present invention relates to an AB co-polymer or AB co-oligomer having a resole like structure. In particular the invention is directed to an AB co-polymer or AB co-oligomer, a method of preparing the AB co-polymer or AB co-oligomer, a composition comprising the AB co-polymer or AB co-oligomer, and uses thereof.

### BACKGROUND OF THE INVENTION

Phenolic polymers are a class of synthetic polymers typically derived from the reaction of phenolic compounds, such as phenol, with aldehydes, such as formaldehyde, under either acidic or basic conditions. Phenolic polymers are known for their exceptional thermal stability, mechanical strength, and resistance to chemical degradation, making them highly versatile in industrial and consumer applications.

Phenolic polymers were the first commercially successful synthetic plastic. Bakelite was developed in 1907 and is a thermosetting phenol formaldehyde resin, formed from a condensation reaction of phenol with formaldehyde. Due to its non-conductive and heat resistant properties, Bakelite was used in various applications such as electrical insulators, casings, and pipes.

Today, phenolic polymers are widely used across various applications. In the construction industry, phenolic resins serve as adhesives in plywood, laminates, and particleboard, offering excellent bonding and durability. In electronics, their insulating and thermal properties make them essential for circuit boards, connectors, and molded parts. Phenolic foams are employed in thermal and sound insulation for buildings and industrial equipment, while their fire-resistant nature makes them ideal for high-safety environments such as transportation and aerospace. Their versatility and resilience continue to drive their importance in modern industrial and consumer applications.

Bisphenol A (BPA) is an organic compound having two phenolic groups and is widely used in the production of polycarbonate plastics and epoxy resins. Its ability to impart strength, transparency, and thermal resistance makes it a key ingredient in manufacturing products like food containers, water bottles, and medical devices. Additionally, epoxy resins derived from BPA are commonly used as protective coatings for food and beverage cans, as well as in adhesives and sealants. However, BPA has come under scrutiny due to health and environmental concerns. BPA is an endocrine disruptor, meaning that BPA may interfere with hormonal functions in humans and wildlife, raising concerns about its impact on reproductive health, development, and chronic diseases like cancer. The use of BPA in the manufacture of food containers leads to BPA leaching into food products, especially when exposed to high temperatures or acidic conditions, which gives rise to toxicity in humans. These issues have prompted the abandonment of BPA and have increased consumer demand for BPA-free alternatives.

On December 19, 2024, the European Commission (EC) adopted a ban on the use of BPA and other bisphenols and bisphenol derivatives in certain food-contact materials and articles. The ban was first proposed by the EC on February 9, 2024. The initial draft of the BPA Regulation modified the listing for BPA under the EU Plastics Regulation (Reg. No. 10/2011) to severely restrict its use in food-contact applications but did not change the Plastic Regulation listing for 4,4'-sulphonyldiphenol, commonly known as bisphenol S (BPS). Thus, plastic materials and articles manufactured with BPS were not subject to the restrictions in the initial draft. The revised regulation adopted in December applies the restrictions to BPS and other hazardous bisphenols and bisphenol derivatives and has much broader implications for industry.

Under Commission Regulation (EU) 2024/3190, the use of BPA and its salts is prohibited in the manufacture of food-contact plastics, varnishes and coatings, printing inks, adhesives, ion-exchange resins, silicones, and rubber. Some very limited exceptions to the prohibition on BPA are listed in Annex II. Permitted uses of BPA include the use of BPA (and its salts) as monomer or starting substance in the manufacture of: (1) polysulfone filtration membrane assemblies; and (2) liquid epoxy resins to be applied on self-supporting food contact materials or articles with a capacity greater than 1000 liters. Both exempted uses are subject to certain migration limits. That is, the migration of BPA must not be detectable using 1 µg/kg (or 1 ppb) as a detection limit. Additionally, the final food contact articles must be cleaned and flushed prior to first being brought into contact with food.

Other hazardous bisphenols and hazardous bisphenol derivatives (listed in Annex VI, Part 3 of Regulation (EC) No. 1272/2008 as category 1A or 1B carcinogenic, mutagenic, toxic to reproduction or category 1 endocrine disruptor for human health) are also prohibited for use in the manufacture of food-contact materials and articles, unless explicitly authorized.

Article 6 of the Regulation requires the European Food Safety Authority (EFSA) to publish guidelines prior to January 20, 2027, regarding information needed in a petition to seek authorization of other hazardous bisphenols/derivatives.

The BPA Regulation also amends the Plastics Regulation by deleting BPA (FCM Substance No. 151) and 4,4-dihydroxydiphenyl sulphone or BPS (FCM Substance No. 154) from Annex I of the Plastics Regulation. (Instead, the Plastics Regulation will contain a cross-reference to the BPA Regulation.) As noted above, the proposed removal of BPS from Annex I of the Plastics Regulation was not included in the initial draft of the Regulation that was open for public consultation. Thus, industry was not provided with an opportunity to submit comments to the EC on the impact of a ban on BPS. The Regulation does not extend the exemptions for BPA (i.e., use in manufacture of polysulfone used in food processing membrane assemblies, and in certain liquid epoxy resins in high-capacity articles) to BPS. Likewise, the transition provisions in Articles 11 and 12 only reference food-contact material and articles manufactured using BPA. Article 5(3), however, does temporarily permit the continued use of BPS in food-contact applications if the provisions of Article 5(3)(a)-(d) are met and an application seeking its authorization is filed within 9-months of EFSA releasing its forthcoming guidelines.

The BPA Regulation also includes a periodic reporting obligation for business operators using BPA or other hazardous bisphenols/hazardous bisphenol derivatives (after they are listed in Annex II) on the status of developing alternatives for the exempted uses of BPA or other hazardous bisphenols/hazardous bisphenol derivatives. The BPA Regulation also includes a Declaration of Compliance requirement (for all marketing stages other than the retail stage).

The chemical structure of substances for which the definition 'bisphenol' and 'bisphenol derivative' applies is as follows:

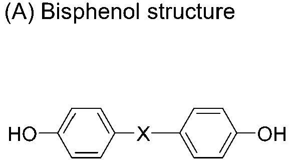

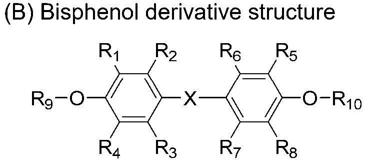

X refers to any bridging group separating the two phenyl rings by one single atom, but the atom can have any substituent(s). R₁ to R₁₀ refers to any substituent. At least one of the substituents is not a hydrogen atom (-H). For the avoidance of doubt, the X and R₁ to R₁₀ values given in relation to the (A) Bisphenol structure and (B) Bisphenol derivative structure are those given in Annex VI, Part 3 of Regulation (EC) No. 1272/2008 and are not intended to define the present invention. The present invention is defined by the definitions of x and R¹ to R⁵ in the appended claims.

The polycondensation reaction between phenol and an aldehyde such as formaldehyde which is used in traditional phenolic polymer preparation will inevitably produce some degree of dimeric phenol compound which falls within the bisphenol derivative structure as a side product, such as bisphenol F in the case of formaldehyde. These bisphenol contaminants are especially difficult to remove from phenolic polymers and therefore make such polymers inappropriate for uses where they may come into contact with food or potable water.

The compounds of the present invention do not fall within the (A) Bisphenol structure or the (B) Bisphenol derivative structure given in Annex VI, Part 3 of Regulation (EC) No. 1272/2008. Nor does the process for their preparation produce any side product contaminants falling within this regulation. The compounds of present invention therefore serve as useful non-toxic alternatives for both bisphenol compounds themselves and for phenolic polymers.

The present invention relates to a class of AB co-polymers or AB co-oligomers derived from monomers of phenolic compound and using xylyl monomers in place of the aldehyde. The AB co-polymers or AB co-oligomers of the present invention are then further functionalised to improve their properties, such as compatibility with other materials, such as polyester polymers. The AB co-polymers or AB co-oligomers of the present invention bear phenolic hydroxy groups in their polymerised forms which allow them to act as non-toxic replacements for BPA, or a non-toxic coating in products such as food containers. The AB co-polymers or AB co-oligomers of the present invention may also serve as replacements for traditional phenolic polymers.

### SUMMARY OF THE INVENTION

In a first aspect, the present invention relates to an AB co-polymer or AB co-oligomer derived from repeating units of A and B, wherein each repeating unit A is independently selected from the following structures: 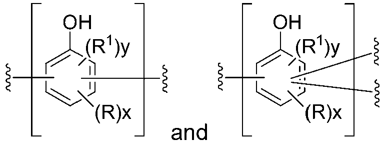 wherein each repeating unit B is independently selected from the following structures: 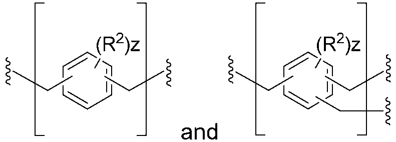 wherein:
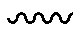 represents the point of connection to the adjacent repeating unit or to a terminal group, wherein the terminal group of repeating unit A is -H, and the terminal group of repeating unit B is -R⁵;
each R is independently selected from: -CHR⁴-OH, -CHR⁴-O-C₁ to C₂₀ alkyl, -CHR⁴-O-C₁ to C₂₀ haloalkyl, -CHR⁴-O-C₂ to C₂₀ alkenyl, -CHR⁴-O-C₂ to C₂₀ alkynyl, -CHR⁴-O-C₃ to C₂₀ cycloalkyl, -CHR⁴-O-C₄ to C₂₀ heterocycloalkyl, -CHR⁴-O-C₂ to C₂₀ alkyloxy, -CHR⁴-O-C₆ to C₁₀ aryl, -CHR⁴-O-C₃ to C₁₀ heteroaryl, -CHR⁴-O-(C₁ to C₁₀ alkyl)-(C₆ to C₁₀ aryl), -CHR⁴-O-(C₁ to C₁₀ alkenyl)-(C₆ to C₁₀ aryl), -CHR⁴-O-(C₁ to C₁₀ alkyl)-(C₃ to C₁₀ heteroaryl), - CHR⁴-O-CHR⁴-A, and -CHR⁴-O-B; wherein the C₆ to C₁₀ aryl and the C₃ to C₁₀ heteroaryl is optionally substituted;
each R¹ is independently selected from: -C₁ to C₂₀ alkyl, -C₂ to C₂₀ alkenyl, -C₂ to C₂₀ alkynyl, -C₃ to C₂₀ cycloalkyl, -C₁ to C₂₀ alkyloxy, -OR³, -NR³₂, -SR³, -CN, -NO₂, -F, -Cl, - Br, and -I;
each R² is independently selected from: -C₁ to C₂₀ alkyl, -C₂ to C₂₀ alkenyl, -C₂ to C₂₀ alkynyl, -C₃ to C₂₀ cycloalkyl, -C₁ to C₂₀ alkyloxy, -OR³, -NR³₂, -SR³, -CN, -NO₂, -F, -Cl, - Br, and -I;
each R³ is independently selected from: -H, -C₁ to C₂₀ alkyl, -C₂ to C₂₀ alkenyl, -C₂ to C₂₀ alkynyl, -C₃ to C₂₀ cycloalkyl, and -C₁ to C₂₀ alkyloxy;
each R⁴ is independently selected from: -H, -C₁ to C₂₀ alkyl, -C₂ to C₂₀ alkenyl, -C₂ to C₂₀ alkynyl, -C₃ to C₂₀ cycloalkyl, -C₃ to C₂₀ heterocycloalkyl, an optionally substituted -C₆ to C₁₀ aryl, and an optionally substituted -C₂ to C₁₀ heteroaryl;
each R⁵ is independently a suitable leaving group;
each x is independently selected from: 0, 1, and 2, with the proviso that at least one x value within the AB co-polymer or AB co-oligomer is 1 or 2;
each y is independently selected from: 0, 1, 2, and 3;
each z is independently selected from: 0, 1, 2, 3, and 4; and
wherein the AB co-polymer or AB co-oligomer comprises at least two A repeating units and at least one B repeating unit, and wherein the AB co-polymer or AB co-oligomer comprises no more than 45 A repeating units and B repeating units in total.

In a second aspect, the present invention relates to a method of preparing an AB co-polymer or AB co-oligomer, as defined herein, the method comprising contacting a precursor AB co-polymer or precursor AB co-oligomer with an aldehyde of formula O=CHR⁴ and either an acid or a base; wherein the precursor AB co-polymer or precursor AB co-oligomer is derived from repeating units of A1 and B, wherein each repeating unit A1 is independently selected from the following structures: 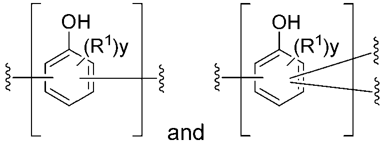
wherein 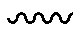 represents the point of connection to the adjacent repeating unit or to a terminal group, wherein the terminal group of repeating unit A1 is -H;
wherein the precursor AB co-polymer or precursor AB co-oligomer comprises at least two A1 repeating units and at least one B repeating unit, and wherein the precursor co-polymer or co-oligomer comprises no more than 45 A1 repeating units and B repeating units in total;
and optionally the method further comprising contacting the resulting co-polymer or co-oligomer with one or more alcohol selected from HO-C₁ to C₂₀ alkyl, HO-C₁ to C₂₀ haloalkyl, HO-C₂ to C₂₀ alkenyl, HO-C₂ to C₂₀ alkynyl, HO-C₃ to C₂₀ cycloalkyl, HO-C₃ to C₂₀ heterocycloalkyl, HO-C₂ to C₂₀ alkyloxy, HO-C₆ to C₁₀ aryl, HO-C₃ to C₁₀ heteroaryl, HO-(C₁ to C₁₀ alkyl)-(C₆ to C₁₀ aryl), HO-(C₁ to C₁₀ alkenyl)-(C₆ to C₁₀ aryl), and HO-(C₁ to C₁₀ alkyl)-(C₃ to C₁₀ heteroaryl); wherein the C₆ to C₁₀ aryl and the C₃ to C₁₀ heteroaryl is optionally substituted; and
wherein B, x, y, z, and R¹ to R⁵ are as defined herein.

In a third aspect, the present invention provides a composition comprising an AB co-polymer or AB co-oligomer as defined herein.

In a fourth aspect, the present invention provides the use of an AB co-polymer or AB co-oligomer as defined herein, or composition as defined herein, as a coating, or in the preparation of a composite material.

In a fifth aspect, the present invention provides an article having one or more surface at least partially covered by a coating comprising an AB co-polymer or AB co-oligomer as defined herein, or of a composition as defined herein.

In a sixth aspect, the present invention provides a composite material comprising an AB co-polymer or AB co-oligomer as defined herein, or of a composition as defined herein.

In a seventh aspect, the present invention provides the use of an AB co-polymer or AB co-oligomer as defined herein to replace a bisphenol compound or a phenolic polymer in a system.

### DETAILED DESCRIPTION

### Definition of Terms

For the purposes of the present invention, the following terms as used herein shall, unless otherwise indicated, be understood to have the following meanings. Other terms that are not as defined below are to be understood as their normal meaning in the art.

The term "polymer" refers to a macromolecule comprising repeating units, derived from monomers. The term "oligomer" refers to a molecule composed of a small number of repeating units, derived from monomers. The exact number of repeating units in a "polymer" vs an "oligomer" is subjective and may vary depending on the field of study or the material being described. Typically, a chain of from 3 to 10 repeating units may be considered to be an "oligomer" whereas a chain of 11 of more repeating units may be considered to be a "polymer".

The term "co-polymer" or "co-oligomer" refers to a polymer or oligomer, respectively, which is comprised of multiple different repeating units, for example, two different repeating units. An "AB" co-polymer or "AB" co-oligomer is a co-polymer or co-oligomer, respectively, comprising two different repeating units in an alternating pattern. Nylon is an example of an AB co-polymer. An AB co-polymer or AB co-oligomer may be linear, or may comprise branching of the A or B repeating units.

The term "terminal group" refers to a group at an end point of a polymer or oligomer. The repeating unit is a 'residue' of the monomer, meaning that certain groups present in the monomer are lost during the polymerisation or oligomerisation reaction. The terminal group is typically, an unreacted leaving group derived from the monomer from which the polymer or oligomer is formed.

The term "phenolic compound" as used herein refers to phenol, optionally substituted with one or more substituents at the 2, -3-, 4-, 5-, and/or 6- positions relative to the phenol oxygen. The term "phenolic polymer" refers to a polymer prepared by the polycondensation reaction of one or more phenolic compound and one or more aldehyde.

The term "bisphenol compound" as used herein refers to an organic compound having a structure falling with the (B) Bisphenol derivative structure defined hereinabove.

The term "alkyl" as used herein refers to a monovalent straight- or branched-chain alkyl moiety. Unless specifically indicated otherwise, the term "alkyl" does not include optional substituents. The term "haloalkyl" as used herein refers to an alkyl group substituted with one or more halogen atoms. The term "halogen" as used herein refers to any of fluorine, chlorine, bromine, or iodine.

The term "alkyloxy" as used herein refers to an alkyl group substituted with one or more hydroxy groups and/or ether groups.

The term "cycloalkyl" as used herein refers to a monovalent saturated aliphatic hydrocarbyl moiety containing at least one ring, wherein said ring has at least 3 ring carbon atoms. The cycloalkyl groups mentioned herein may optionally have alkyl groups attached thereto. Examples of cycloalkyl groups include groups that are monocyclic, polycyclic (e.g., bicyclic) or bridged ring system. Examples of cycloalkyl groups include cyclopropyl, cyclobutyl, cyclopentyl, cyclohexyl and the like.

The term "alkenyl" as used herein refers to a monovalent straight- or branched-chain alkyl group containing at least one carbon-carbon double bond, of either E or Z configuration unless specified. The term "alkynyl" as used herein refers to a monovalent straight- or branched-chain alkyl group containing at least one carbon-carbon triple bond. Examples of alkenyl groups include ethenyl, 2-propenyl, 1-butenyl, 2-butenyl, 3-butenyl, 1-pentenyl, 2-pentenyl, 3-pentenyl, 1-hexenyl, 2-hexenyl, 3-hexenyl and the like.

The term "aryl" as used herein refers to an aromatic carbocyclic ring system. An example of an aryl group includes a group that is a monocyclic aromatic ring system or a polycyclic ring system containing two or more rings, at least one of which is aromatic. Examples of aryl groups include aryl groups that comprise from 1 to 6 exocyclic carbon atoms in addition to ring carbon atoms. Examples of aryl groups include aryl groups that are monovalent or polyvalent as appropriate. Examples of monovalent aryl groups include phenyl, benzyl, naphthyl, fluorenyl, azulenyl, indenyl, anthryl and the like. An example of a divalent aryl group is 1,4-phenylene.

The term "heteroaryl" as used herein refers to an aromatic heterocyclic ring system wherein said ring atoms include at least one ring carbon atom and at least one ring heteroatom selected from nitrogen, oxygen and sulphur. Examples of heteroaryl groups include heteroaryl groups that are a monocyclic ring system or a polycyclic (e.g. bicyclic) ring system, containing two or more rings, at least one of which is aromatic. Examples of heteroaryl groups include those that, in addition to ring carbon atoms, comprise from 1 to 6 exocyclic carbon atoms. Examples of heteroaryl groups include those that are monovalent or polyvalent as appropriate. Examples of heteroaryl groups include pyridyl, pyrimidyl, thiopheneyl, isoxazolyl and benzo[b]furanyl groups.

The term "epoxy resin" as used herein refers to an organic compound having one or more epoxide groups. In the context of the present invention the term "epoxy resin" may be used to refer to a monomeric, or polymeric organic compound, having one or more epoxide groups. An "epoxy resin" may also be referred to in some publications as an "epoxy". The terms "epoxy resin hardener", "hardener" and "epoxy resin curative" as used herein refer to a monomeric, or polymeric organic compound, having one or more primary amine, secondary amine, and/or hydroxyl groups capable of performing a nucleophilic addition to the epoxide group of an epoxy resin. The term "curing agent" as used herein refers to any species that is capable of causing crosslinking between molecules of epoxy resin, which may also be referred to as hardening or curing the epoxy resin. The terms "epoxy resin hardener", "hardener" and "epoxy resin curative" as used herein thus fall within the scope of the term "curing agent". However, some curing agents do not fall within the scope of the terms "epoxy resin hardener", "hardener" and "epoxy resin curative", for example, a homo-polymerisation catalyst may be a "curing agent" but not a "epoxy resin hardener", "hardener" and "epoxy resin curative" in the context of the present invention. The term "cured epoxy resin" as used herein refers to an organic compound produced by reaction of an "epoxy resin" with a "curing agent", such as an "epoxy resin curative", for example by the processes described herein.

The term "bio-based", as used herein refers to a material that is derived in whole or in part from biomass resources. Biomass resources are organic materials that are available on a renewable or recurring basis such as crop residues, wood residues, grasses, and aquatic plants. The term "biocarbon" as used herein describes an atom of carbon that is "bio-based", i.e. that the atom of carbon in question is derived from a biomass resource. The skilled person is able to determine if a material is from a biomass resource, provided that the source of the material is known. Therefore, a skilled person is also able to determine if a material is derived from a from biomass resource, providing they have knowledge of the precursor material from which the material in question is derived. Nevertheless, objective tests may also be used to identify "biocarbon". ASTM D6866 and ISO 16620-2 both provide methods of identifying "biocarbon" based on isotopic analysis. "Biocarbon" has a higher abundance of ¹⁴C than, for example, carbon derived from fossil fuels. Thus, the skilled person is also able to objectively test the biocarbon content of a given material.

The present invention relates to a hitherto unknown class of AB co-polymer or AB co-oligomer which may serve as a non-toxic replacement for BPA as well as finding utility in the preparation of coatings and composite materials. The AB co-polymer or AB co-oligomer comprises phenolic hydroxy groups which may mimic the reactivity of BPA in epoxy resin systems, allowing the AB co-polymer or AB co-oligomer to act as an epoxy resin curative in the place of BPA. The AB co-polymer or AB co-oligomer of the present invention has advantageously low toxicity as compared to BPA.

### Detailed Description of the Invention

In a first aspect, the present invention relates to an AB co-polymer or AB co-oligomer derived from repeating units of A and B, wherein each repeating unit A is independently selected from the following structures: 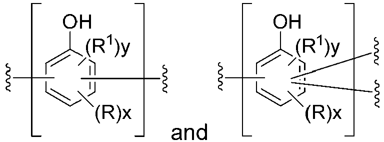 wherein each repeating unit B is independently selected from the following structures: 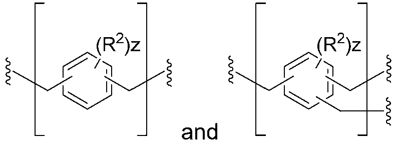 wherein:
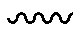 represents the point of connection to the adjacent repeating unit or to a terminal group, wherein the terminal group of repeating unit A is -H, and the terminal group of repeating unit B is -R⁵;
each R is independently selected from: -CHR⁴-OH, -CHR⁴-O-C₁ to C₂₀ alkyl, -CHR⁴-O-C₁ to C₂₀ haloalkyl, -CHR⁴-O-C₂ to C₂₀ alkenyl, -CHR⁴-O-C₂ to C₂₀ alkynyl, -CHR⁴-O-C₃ to C₂₀ cycloalkyl, -CHR⁴-O-C₄ to C₂₀ heterocycloalkyl, -CHR⁴-O-C₂ to C₂₀ alkyloxy, -CHR⁴-O-C₆ to C₁₀ aryl, -CHR⁴-O-C₃ to C₁₀ heteroaryl, -CHR⁴-O-(C₁ to C₁₀ alkyl)-(C₆ to C₁₀ aryl), -CHR⁴-O-(C₁ to C₁₀ alkenyl)-(C₆ to C₁₀ aryl), -CHR⁴-O-(C₁ to C₁₀ alkyl)-(C₃ to C₁₀ heteroaryl), - CHR⁴-O-CHR⁴-A, and -CHR⁴-O-B; wherein the C₆ to C₁₀ aryl and the C₃ to C₁₀ heteroaryl is optionally substituted;
each R¹ is independently selected from: -C₁ to C₂₀ alkyl, -C₂ to C₂₀ alkenyl, -C₂ to C₂₀ alkynyl, -C₃ to C₂₀ cycloalkyl, -C₁ to C₂₀ alkyloxy, -OR³, -NR³₂, -SR³, -CN, -NO₂, -F, -Cl, - Br, and -I;
each R² is independently selected from: -C₁ to C₂₀ alkyl, -C₂ to C₂₀ alkenyl, -C₂ to C₂₀ alkynyl, -C₃ to C₂₀ cycloalkyl, -C₁ to C₂₀ alkyloxy, -OR³, -NR³₂, -SR³, -CN, -NO₂, -F, -Cl, - Br, and -I;
each R³ is independently selected from: -H, -C₁ to C₂₀ alkyl, -C₂ to C₂₀ alkenyl, -C₂ to C₂₀ alkynyl, -C₃ to C₂₀ cycloalkyl, and -C₁ to C₂₀ alkyloxy;
each R⁴ is independently selected from: -H, -C₁ to C₂₀ alkyl, -C₂ to C₂₀ alkenyl, -C₂ to C₂₀ alkynyl, -C₃ to C₂₀ cycloalkyl, -C₃ to C₂₀ heterocycloalkyl, an optionally substituted -C₆ to C₁₀ aryl, and an optionally substituted -C₂ to C₁₀ heteroaryl;
each R⁵ is independently a suitable leaving group;
each x is independently selected from: 0, 1, and 2, with the proviso that at least one x value within the AB co-polymer or AB co-oligomer is 1 or 2;
each y is independently selected from: 0, 1, 2, and 3;
each z is independently selected from: 0, 1, 2, 3, and 4; and
wherein the AB co-polymer or AB co-oligomer comprises at least two A repeating units and at least one B repeating unit, and wherein the AB co-polymer or AB co-oligomer comprises no more than 45 A repeating units and B repeating units in total.

The AB co-polymer or AB co-oligomer comprises a chain of alternating repeating units of A and B. The repeating units of A or B have either two or three points of connection to the adjacent repeating unit or to a terminal group depending on their structure. In the context of the present invention, a repeating unit with two points of connection is referred to as divalent and a repeating unit with three points of connection is referred to as trivalent. For the avoidance of doubt, a repeating unit A is only considered to be trivalent if it is bonded to three adjacent moieties of repeating unit B. A repeating unit A is still considered to be divalent if it is bonded to two adjacent moieties of repeating unit B and to a hydrogen atom at a third position. A terminal repeating unit A is still considered to be divalent and will be bonded to one adjacent moieties of repeating unit B and to at least one hydrogen. The same considerations apply to the A1 repeating unit discussed below. Each point of connection is a bond to an adjacent repeating unit of the other type, or to a terminal group. In the case that a repeating unit has three points of connection, this will typically cause branching in the AB co-polymer or AB co-oligomer as the repeating unit with three points of connection will typically be bonded to three repeating units of the other type. A terminal repeating unit will be bonded to only one repeating unit of the other type. **If** each of the repeating units only have two points of connection to adjacent repeating units, then the AB co-polymer or AB co-oligomer will be linear.

The A repeating unit is derived from a phenolic compound, such as phenol, which is described below as a precursor of formula (1), and is typically activated at the -2, -4, and -6, (ortho and para) positions relative to the phenolic -OH. Bonding to the adjacent repeating unit typically occurs at two of these positions, but may also occur at all three of these positions. The repeating unit A is preferably bonded to the adjacent repeating unit or the terminal group at the -2, -4, and -6, (ortho and para) position relative to the phenolic -OH, and thus preferably is independently selected from the following structures: 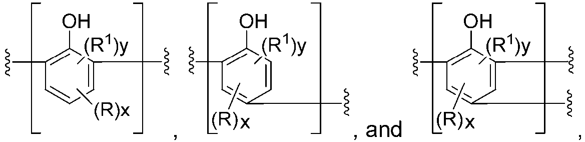 wherein x, y, R, R¹, and R³ to R⁴, are as defined herein.

As would be appreciated, the most activated positions on a phenolic compound monomer may vary depending on any further substitution. As would be appreciated, bonding must also occur at unsubstituted positions on the phenolic compound, i.e. substituted with hydrogen. The position of the bonding to the adjacent repeating unit, and the ratio of divalent to trivalent A repeating units will therefore depend on reaction conditions, such as the molar ratio of the corresponding A and B monomers, in addition to the substitution pattern on the phenolic compound.

Typically, less than half of the A repeating unit in the AB co-polymer or AB co-oligomer are trivalent, and more than half are divalent. For example, the ratio of divalent to trivalent A repeating units may be from 60:40 to 95:5, preferably from 70:30 to 95:5, more preferably from 80:20 to 95:5, even more preferably from 90:10 to 95:5.

Preferably, repeating unit A is divalent, and each A repeating unit independently has the structure: 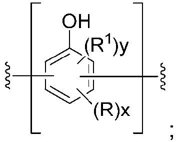 more preferably 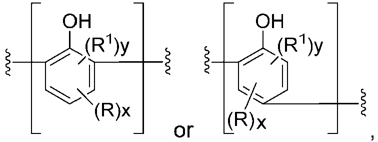 wherein x, y, R, R¹, and R³ to R⁴, are as defined herein.

The B repeating unit will be either divalent or trivalent depending on the structure of the precursor monomer used. The precursor monomer of repeating unit B is a benzene ring substituted with two or three -CH₂-R⁵ groups, and optionally substituted with z R² groups, and is described herein as a precursor of formula (2). Whether the precursor of formula (2) is substituted with two or three -CH₂-R⁵ groups will determine whether the resulting repeating unit B will be divalent or trivalent, respectively. The position of the resulting methylene bridges to the adjacent repeating unit, or terminal group, will depend on the position of the -CH₂-R⁵ groups on the precursor of formula (2). Preferably, the precursor of formula (2) is substituted with two -CH₂-R⁵ groups. These groups are preferably in a 1,4-position (para) or a 1,2-postion (ortho) to each other.

Typically, less than half of the B repeating unit in the AB co-polymer or AB co-oligomer are trivalent, and more than half are divalent. For example, the ratio of divalent to trivalent B repeating units may be from 60:40 to 95:5, preferably from 70:30 to 95:5, more preferably from 80:20 to 95:5, even more preferably from 90:10 to 95:5.

Preferably, repeating unit B is divalent, and each B unit independently has the structure: 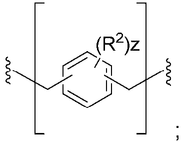 more preferably 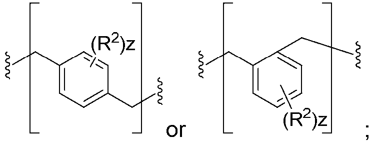 wherein z, R², R³, and R⁵, are as defined herein.

Typically, all of the of the -CH₂-R⁵ groups on the precursor monomer are consumed by reaction with monomers of repeating unit A. Preferably, the AB co-polymer or AB co-oligomer is terminated exclusively with repeating unit A, and thus each repeating unit B is bonded to 2 or 3 of repeating unit A, and is not bonded to a terminal R⁵ group.

Typically, less than half of the total A repeating units and B repeating units in the AB co-polymer or AB co-oligomer are trivalent, and more than half are divalent. For example, the ratio of divalent to trivalent A repeating units and B repeating units in total, may be from 60:40 to 95:5, preferably from 70:30 to 95:5, more preferably from 80:20 to 95:5, even more preferably from 90:10 to 95:5.

The AB co-polymer or AB co-oligomer comprises at least two A repeating units and at least one B repeating unit, this means that the minimum number of repeating units is 3, and the shortest possible oligomer chain has an A-B-A pattern. The maximum number of repeating units is 45. Preferably, the AB co-polymer or AB co-oligomer comprises no more than 40, 35, 30, 20, 15, or 10 A repeating units and B repeating units in total. For the avoidance of doubt, the count of repeating units includes any repeating units that are part of an R group, such as -CHR⁴-O-CHR⁴-A, and -CHR⁴-O-B.

The R group is typically attached to the AB co-polymer or AB co-oligomer by a reaction with an aldehyde of formula O=CHR⁴, such as formaldehyde. The initial reaction typically yields an R group of -CHR⁴-OH, for example, -CH₂-OH. The -CHR⁴-OH group may be further converted into an -CHR⁴-ether group by reaction with the corresponding alcohol. It is also possible that -CHR⁴-O-CHR⁴-A or -CHR⁴-O-B groups are formed by reaction between the CHR⁴-OH group and any monomer precursors of the A or B repeating units. For the avoidance of doubt, example structures of -CHR⁴-O-CHR⁴-A or -CHR⁴-O-B are shown below:
-CHR⁴-O-CHR⁴-A: 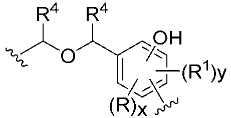
-CHR⁴-O-B:

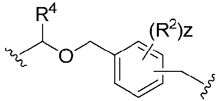

The A or B repeating unit of a CHR⁴-O-CHR⁴-A or -CHR⁴-O-B group may be bonded to further repeating units, and/or a terminal group at the positions denoted by 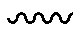 . The addition of further R groups may also be possible on a -CHR⁴-O-CHR⁴-A group or on a repeating unit A that is bonded to a -CHR⁴-O-B.

When an R group is selected from: -CHR⁴-O-C₆ to C₁₀ aryl, -CHR⁴-O-C₃ to C₁₀ heteroaryl, -CHR⁴-O-(C₁ to C₁₀ alkyl)-(C₆ to C₁₀ aryl), -CHR⁴-O-(C₁ to C₁₀ alkenyl)-(C₆ to C₁₀ aryl), and -CHR⁴-O-(C₁ to C₁₀ alkyl)-(C₃ to C₁₀ heteroaryl); the C₆ to C₁₀ aryl and the C₃ to C₁₀ heteroaryl is optionally substituted. The nature of the optional substitution is not particularly limited. For example, the C₆ to C₁₀ aryl and the C₃ to C₁₀ heteroaryl group may be substituted with one or more group selected from: -C₁ to C₂₀ alkyl, -C₂ to C₂₀ alkenyl, - C₂ to C₂₀ alkynyl, -C₃ to C₂₀ cycloalkyl, -C₂ to C₂₀ alkyloxy, -OR³, -NR³₂, -SR³, -CN, -NO₂, -F, -Cl, -Br, and -I; preferably C₁ to C₂₀ alkyl, -C₂ to C₂₀ alkenyl, -OR³, -NR³₂, -F, -Cl, -Br, and -I.

Various corresponding alcohols are commercially available which provide optionally substituted -CHR⁴-O-C₆ to C₁₀ aryl, -CHR⁴-O-C₃ to C₁₀ heteroaryl, -CHR⁴-O-(C₁ to C₁₀ alkyl)-(C₆ to C₁₀ aryl), -CHR⁴-O-(C₁ to C₁₀ alkenyl)-(C₆ to C₁₀ aryl), and -CHR⁴-O-(C₁ to C₁₀ alkyl)-(C₃ to C₁₀ heteroaryl) R groups. Some of these alcohols may advantageously be bio-based in origin. Additionally and alternatively, some of these alcohols may be phenolic compounds which may also be useful as a precursor of formula (1). Some examples of such biobased alcohols include those compounds shown in Table 1 below, as well as for example, phenethyl alcohol, cinnamyl alcohol, and piperonyl alcohol.

Preferably, each R is independently selected from: -CHR⁴-OH, -CHR⁴-O-C₁ to C₂₀ alkyl, - CHR⁴-O-C₂ to C₂₀ alkenyl, -CHR⁴-O-C₂ to C₂₀ alkynyl, -CHR⁴-O-C₃ to C₂₀ cycloalkyl, and -CHR⁴-O-C₂ to C₂₀ alkyloxy. More preferably, each R is independently selected from - CHR⁴-OH, -CHR⁴-O-Me, -CHR⁴-O-Et, -CHR⁴-O-Pr, -CHR⁴-O-Bu, -CHR⁴-O-C₅ alkyl, - CHR⁴-O-C₆ alkyl, -CHR⁴-O-C₇ alkyl, and -CHR⁴-O-C₈ alkyl. The R groups other than - CHR⁴-OH, have been surprisingly found to provide the AB co-polymer or AB co-oligomer with a high compatibility with polyester polymers. The -CHR⁴-O-alkyl group is particularly well suited to compatibility with polyester polymers.

The R¹ group represents optional substitution on repeating unit A, which is derived from any substitution which may be present on the precursor monomer phenolic compound. Preferably R¹ is an activating group. More preferably R¹ is an activating group and is positioned at the 3- and/or 5-position (meta) to the phenolic -OH group. Activation, and particularly activation at the 2-, 4-, and 6-positions will encourage the polymerisation reaction between the precursor of formula (1) and the precursor of formula (2) at these positions.

Preferably, each R¹ is independently selected from: -C₁ to C₂₀ alkyl, -C₂ to C₂₀ alkenyl, and -OR³; and each R³ is independently selected from: -H, and -C₁ to C₂₀ alkyl. More preferably, each R¹ is independently selected from: -Me, -OMe, -OH, -C₁₇ alkyl and -C₁₇ alkenyl.

Whilst phenol is typically used as the precursor of formula (1). Non-toxic and bio-based alternatives may advantageously be used as the precursor of formula (1) from which repeating unit A is derived. Some examples of suitable substituted bio-based precursors of formula (1) from which the repeating unit A may be derived are shown in Table 1 below.

**Table 1: Substituted Bio-based Precursors of Formula (1)**

| Name | Structure | R¹ groups | Natural Source |
|---|---|---|---|
| Cardanol | 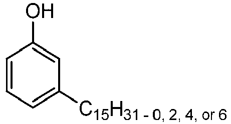 | 3-(C₁₅H_{31 - 0, 2, 4, or 6}) | Cashew Nut Shell Liquid (CNSL) |
| Cardol | 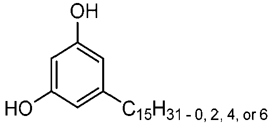 | 3-OH | CNSL |
| | | 5-(C₁₅H_{31 - 0, 2, 4, or 6}) | |
| 2-methylcardol | 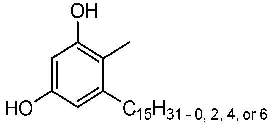 | 2-Me | CNSL |
| | | 3-(C₁₅H₃₁ -_{0, 2, 4, or 6}) | |
| | | 5-OH | |
| Resorcinol | 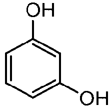 | 3-OH | Rye |
| Catechol | 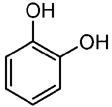 | 2-OH | Acadia |
| Hydroquinone | 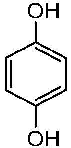 | 4-OH | Quinic acid |
| Phloroglucinol | 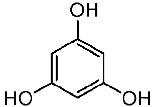 | 3,5-OH | Phloretin |
| Guaiacol | 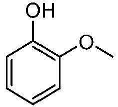 | 2-OMe | Wood |

The R² group represents optional substitution on repeating unit B, which is derived from any substitution which may be present on the precursor of formula (2). Preferably each R² is independently selected from: -C₁ to C₂₀ alkyl, -C₂ to C₂₀ alkenyl, and -OR³; and each R³ is independently selected from: -H, and -C₁ to C₂₀ alkyl. More preferably each R² is independently selected from: -Me, -OMe, and -OH.

The R⁴ group is derived from the aldehyde used in the condensation reaction to add the R group. Preferably, each R⁴ is independently selected from: -H, -C₁ to C₁₀ alkyl, C₆ aryl, and furanyl, more preferably each R⁴ is -H. Typically, formaldehyde is used, which provides an R⁴ of -H, although furaldehyde may also be advantageously used as a bio-based alternative, which can be derived from CNSL, this provides an R⁴ group of furanyl.

When an R⁴ group is an optionally substituted -C₆ to C₁₀ aryl or an optionally substituted - C₂ to C₁₀ heteroaryl the nature of the optional substitution is not particularly limited. For example, the optionally substituted -C₆ to C₁₀ aryl or optionally substituted -C₂ to C₁₀ heteroaryl may be substituted with one or more group selected from: -C₁ to C₂₀ alkyl, -C₂ to C₂₀ alkenyl, -C₂ to C₂₀ alkynyl, -C₃ to C₂₀ cycloalkyl, -C₂ to C₂₀ alkyloxy, -OR³, -NR³₂, - SR³, -CN, -NO₂, -F, -Cl, -Br, and -I; preferably C₁ to C₂₀ alkyl, -C₂ to C₂₀ alkenyl, -OR³, - NR³₂, -F, -Cl, -Br, and -I.

The R⁵ group is a leaving group which enables reaction of the precursor of formula (2) with the precursor of formula (1), for example, by electrophilic aromatic substitution. If the AB co-polymer or AB co-oligomer is terminated with a repeating unit B, then an unreacted R⁵ will remain. Preferably, each R⁵ is independently selected from: -F, -Cl, -Br, -I, -OC₁ to C₂₀ alkyl, -OC₂ to C₂₀ alkenyl, -OC₂ to C₂₀ alkynyl, -OC₃ to C₂₀ cycloalkyl, and -OC₂ to C₂₀ alkyloxy. More preferably each R⁵ is independently selected from -OC₁ to C₂₀ alkyl. Most preferably each R⁵ is -OMe.

The x value represents the number of R groups on any given repeating unit A. It is necessary that at last one R group is present in the AB co-polymer or AB co-oligomer, so at least one x value within the AB co-polymer or AB co-oligomer is 1 or 2. It is preferable that more than 1 R group is present, and preferably at least 25 % of the x values within the AB co-polymer or AB co-oligomer are 1 or 2; more preferably at least 50 % of the x values within the AB co-polymer or AB co-oligomer are 1 or 2; even more preferably at least 75 % of the x values within the AB co-polymer or AB co-oligomer are 1 or 2; most preferably x is 1 or 2, in other words every value of x is either 1 or 2. The y value represents the number of R¹ groups on any given repeating unit A. It is not essential that R¹ groups are present. Preferably, y is 1 or 0, more preferably 0. The z value represents the number of R² groups on any given repeating unit B. It is not essential that R² groups are present. Preferably, z is 1 or 0, more preferably 0.

As would be appreciated, the benzene ring of repeating unit A or B has 6 positions available. In the case of repeating unit A, one position is occupied by the phenolic hydroxyl group, and two or three of the other positions are occupied by bonds to a repeating unit B or a terminal group. This means that there will be two or three positions available for R and/or R¹ groups. The total value of x + y for each given repeating unit A must be no more than 3 in a divalent repeating unit A, and no more than 2 in a trivalent repeating unit A. Typically, the value of x is at least 1, so typically the value of y will be 0, 1, or 2 in a divalent repeating unit A, and 0 or 1 in a trivalent repeating unit A. Similarly, repeating unit B has two or three positions occupied by methylene bridges to a repeating unit A, or a terminal group. The total value of z for each given repeating unit B must be no more than 4 in a divalent repeating unit B, and no more than 3 in a trivalent repeating unit B.

Each R group may be the same or different, this can be easily achieved by using a single, or multiple aldehydes and/or alcohols in the preparation steps of the AB co-polymer or AB co-oligomer in which the R group is added. Multiple aldehydes and/or multiple alcohols may be used in combination and/or in series to provide differing R groups. Each x value may be the same or different. Preferably each x value is the same.

Each R¹, R², R³, R⁴, and R⁵ may be the same or different. Each y value and each z value may be the same or different. The properties of R¹, R², R³, R⁴, R⁵, y and z are derived from the monomer precursors used. A single precursor of formula (1) and/or a single precursor of formula (2) may be used to ensure consistent R¹, R², R³, R⁴, R⁵, y and z values as appropriate. Or combinations of different precursors of formula (1) and/or precursors of formula (2) may be used to ensure varied R¹, R², R³, R⁴, R⁵, y and z values. Preferably, each R group is the same. Preferably, each R¹ group is the same. Preferably, each R² group is the same. Preferably, each R³ group is the same. Preferably, each R⁴ group is the same. Preferably, each R⁵ group is the same. Preferably, each y value is the same. Preferably each z value is the same.

In a second aspect, the present invention provides a method of preparing an AB co-polymer or AB co-oligomer, as defined herein, the method comprising contacting a precursor AB co-polymer or precursor AB co-oligomer with an aldehyde of formula O=CHR⁴ and either an acid or a base; wherein the precursor AB co-polymer or precursor AB co-oligomer is derived from repeating units of A1 and B, wherein each repeating unit A1 is independently selected from the following structures: 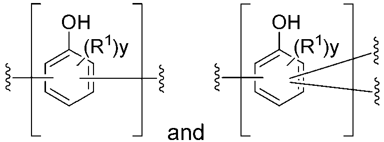
wherein 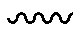 represents the point of connection to the adjacent repeating unit or to a terminal group, wherein the terminal group of repeating unit A1 is -H;
wherein the precursor AB co-polymer or precursor AB co-oligomer comprises at least two A1 repeating units and at least one B repeating unit, and wherein the precursor co-polymer or co-oligomer comprises no more than 45 A1 repeating units and B repeating units in total;
and optionally the method further comprising contacting the resulting co-polymer or co-oligomer with one or more alcohol selected from HO-C₁ to C₂₀ alkyl, HO-C₁ to C₂₀ haloalkyl, HO-C₂ to C₂₀ alkenyl, HO-C₂ to C₂₀ alkynyl, HO-C₃ to C₂₀ cycloalkyl, HO-C₃ to C₂₀ heterocycloalkyl, HO-C₂ to C₂₀ alkyloxy, HO-C₆ to C₁₀ aryl, HO-C₃ to C₁₀ heteroaryl, HO-(C₁ to C₁₀ alkyl)-(C₆ to C₁₀ aryl), HO-(C₁ to C₁₀ alkenyl)-(C₆ to C₁₀ aryl), and HO-(C₁ to C₁₀ alkyl)-(C₃ to C₁₀ heteroaryl); wherein the C₆ to C₁₀ aryl and the C₃ to C₁₀ heteroaryl is optionally substituted; and wherein B, x, y, z, and R¹ to R⁵ are as defined in the first aspect, or in any embodiment disclosed in relation thereto.

The precursor AB co-polymer or precursor AB co-oligomer is the same as the AB co-polymer or AB co-oligomer described herein except without the R group(s). The method of the present invention adds the R group(s). In this regard, repeating unit A1 is the same as repeating unit A except without the R group(s). The repeating unit B is the same in the precursor AB co-polymer or precursor AB co-oligomer and AB co-polymer or AB co-oligomer described herein. All of the structural variations described in the first aspect with regard to the AB co-polymer or AB co-oligomer may also apply to the precursor AB co-polymer or precursor AB co-oligomer *mutatis mutandis,* and therefore to the AB co-polymer or AB co-oligomer prepared or preparable by the method of the second aspect.

Preferably the method of preparing an AB co-polymer or AB co-oligomer wherein the R groups are added to the precursor AB co-polymer or precursor AB co-oligomer takes place at least 50 °C, more preferably at least 60 °C. Preferably the method of preparing an AB co-polymer or AB co-oligomer comprises a base. Preferably, the base used in this method is a hydroxide base, more preferably sodium hydroxide.

The R groups are formed by reaction between the precursor AB co-polymer or precursor AB co-oligomer and the aldehyde, the reaction may be catalysed by acid or base. This reaction forms -CHR⁴-OH groups, which are the R groups. The nature of the R⁴ group is defined by the corresponding R⁴ group present on the aldehyde. Where an alternative R group is desired the resulting co-polymer or co-oligomer formed by this reaction is contacted with one or more alcohol selected from HO-C₁ to C₂₀ alkyl, HO-C₁ to C₂₀ haloalkyl, HO-C₂ to C₂₀ alkenyl, HO-C₂ to C₂₀ alkynyl, HO-C₃ to C₂₀ cycloalkyl, HO-C₃ to C₂₀ heterocycloalkyl, HO-C₂ to C₂₀ alkyloxy, HO-C₆ to C₁₀ aryl, HO-C₃ to C₁₀ heteroaryl, HO-(C₁ to C₁₀ alkyl)-(C₆ to C₁₀ aryl), HO-(C₁ to C₁₀ alkenyl)-(C₆ to C₁₀ aryl), and HO-(C₁ to C₁₀ alkyl)-(C₃ to C₁₀ heteroaryl); wherein the C₆ to C₁₀ aryl and the C₃ to C₁₀ heteroaryl is optionally substituted as described in the first aspect. This alcohol can insert into the - CHR⁴-OH to form an ether R group.

Preferably, the resulting co-polymer or co-oligomer is contacted with one or more alcohol selected from: HO-C₁ to C₂₀ alkyl, HO-C₂ to C₂₀ alkenyl, HO-C₂ to C₂₀ alkynyl, HO-C₃ to C₂₀ cycloalkyl, and HO-C₂ to C₂₀ alkyloxy, more preferably selected from: HO-Me, HO-Et, HO-Pr, HO-Bu, HO-C₅ alkyl, HO-C₆ alkyl, HO-C₇ alkyl, and HO-C₈ alkyl. Multiple alcohols may be used in combination or in series to provide differing R groups, possibly including unreacted CHR⁴-OH groups which may be achieved by using the alcohol in a suitable molar ratio.

Preferably, contacting the resulting co-polymer or co-oligomer with the one or more alcohol takes place at at least 70 °C, preferably at least 80 °C, more preferably at least 90 °C, even more preferably at least 100 °C, even more preferably at least 110 °C. Contacting the resulting co-polymer or co-oligomer with the one or more alcohol may take place during or after the initial step of preparation of the -CHR⁴-OH group(s) of the AB co-polymer or AB co-oligomer. Optionally, the one or more alcohol is used as the solvent for the preparation of the -CHR⁴-OH group(s) of the AB co-polymer or AB co-oligomer.

Additionally, the precursor AB co-polymer or precursor AB co-oligomer may react with two equivalents of the aldehyde and a precursor of formula (1) or a repeating unit A of another equivalent of AB co-polymer or AB co-oligomer to form a -CHR⁴-O-CHR⁴-A R group. The precursor AB co-polymer or precursor AB co-oligomer may also react with the aldehyde and a precursor of formula (2) or a repeating unit B of another equivalent of AB co-polymer or AB co-oligomer to form a -CHR⁴-O-B R group. Further polymer chain propagation may be possible on these -CHR⁴-O-CHR⁴-A or -CHR⁴-O-B groups. The addition of further R groups may also be possible on a -CHR⁴-O-CHR⁴-A group or on a repeating unit A that is bonded to a -CHR⁴-O-B. However, it is preferable that -CHR⁴-O-CHR⁴-A and -CHR⁴-O-B groups are not formed. This can be controlled by ensuring that the reaction mixture is free from the residual monomers prior to commencing the method of preparing an AB co-polymer or AB co-oligomer, as well as ensuring a high dilution of the reaction. The skilled person would be able to ensure that the reaction mixture is free from the residual monomers by use of known purification methods, such as distillation or vacuum distillation.

The method may further comprise the preceding step of preparing the precursor AB co-polymer or precursor AB co-oligomer by contacting one or more precursor of formula (1) with one or more precursor of formula (2) and preferably an acid; wherein the one or more precursor of formula (2) is independently selected from structures (2a) or (2b); 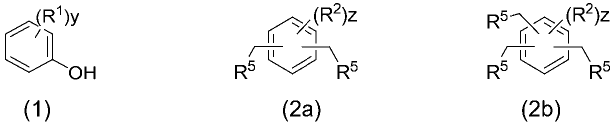 wherein y, z, R¹, R², R³ and R⁵ are as defined in the first aspect, or in any embodiment disclosed in relation thereto. Preferably, the one or more precursor of formula (2) is independently selected from structure (2a), more preferably, the one or more precursor of formula (2) is independently selected from structures (2ai) or (2aii):

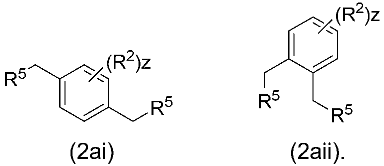

This preceding step corresponds to a polymerisation reaction between the precursor of formula (1) and the precursor of formula (2).

The reaction between one or more precursor of formula (1) and one or more precursor of formula (2) is typically catalysed with an acid, preferably sulphuric acid, although the reaction may also be catalysed with a base. Preferably, the reaction between one or more precursor of formula (1) and one or more precursor of formula (2) takes place at at least 90 °C, more preferably at least 100 °C, even more preferably at least 110 °C, even more preferably at least 140 °C, even more preferably at least 160 °C, even more preferably at least 180 °C, most preferably at least 200 °C. Preferably, the molar ratio of precursor of formula (1) to the precursor of formula (2) is from 1 : 1 to 3 : 1, preferably from 1.5 : 1 to 2.5 to 1. The exact molar ratio used will depend on the desired chain length and desired terminal repeating units.

In a third aspect, the present invention provides a composition comprising an AB co-polymer or AB co-oligomer as defined in the first aspect or in any embodiment disclosed in relation thereto, optionally in combination with one or more of additional polymers in a blend. Examples of the one or more additional polymers includes polyester polymers, acrylic polymers, and alternative phenolic polymers (e.g. conventional phenolic polymers derived from polycondensation of one or more phenolic compounds). Preferably, one or more R of the AB co-polymer or AB co-oligomer comprised within the composition is other than -CHR⁴-OH.

Phenolic polymers are sometimes blended with polyester polymers to enhance certain properties. The composition of the present invention comprising an AB co-polymer or AB co-oligomer can partially or completely replace the phenolic component of such blends. The composition of the present invention comprising an AB co-polymer or AB co-oligomer, and polyester polymer offers improved thermal stability, fire resistance, and mechanical strength compared to pure polyester polymers. These compositions may be used in applications requiring high heat resistance and flame retardancy, such as composite materials, coatings, adhesives, and friction materials (e.g., brake pads and clutches).

It has been surprisingly discovered that the AB co-polymer or AB co-oligomer, when it comprises one or more R group other than -CHR⁴-OH, is compatible with other polymers, such as polyester polymers. The composition preferably comprises an AB co-polymer or AB co-oligomer, wherein one or more R is other than -CHR⁴-OH, and further comprises a polyester polymer.

The composition may further comprise an acrylic polymer. Phenolic polymers are sometimes blended with acrylic polymers in various applications. The AB co-polymer or AB co-oligomer of the present invention can partially or completely replace the phenolic component of such blends. The composition of the present invention comprising an AB co-polymer or AB co-oligomer, and acrylic polymer offers improved properties, particularly in coatings, adhesives, and high-performance composites. The addition of AB co-polymer or AB co-oligomer can improve thermal stability, chemical resistance, and mechanical strength in acrylic-based systems.

The composition may further comprise a phenolic polymer, i.e. a traditional phenolic polymer which is prepared from polycondensation of one or more phenolic compound, such as phenol, and an aldehyde, such as formaldehyde. The addition of the AB co-polymer or AB co-oligomer of the present invention to a traditional phenolic polymer will improve the thermal properties of the resulting blend as compared to the traditional phenolic. This is because the AB co-polymer or AB co-oligomer has a lower concentration of hydroxyl groups as compared to a traditional phenolic polymer.

Any suitable organic solvent may be used as a solvent or diluent in the composition of the present invention, for example MeCN, benzene, methanol, ethanol, IPA, butanol, chloroform, DCM, diethyl ether, DMF, dioxane, ethyl acetate, petroleum ether, kerosine, pentane, hexane, heptane, MTBE, NMP, THF, toluene, xylene and mixtures thereof. As would be appreciated, methods of forming and handling the composition would be known by the skilled person. Preferably, the epoxy resin curative composition comprises less than 0.1 wt.% of free precursor of formula (1) and/or precursor of formula (2).

In a fourth aspect, the present invention provides the use of an AB co-polymer or AB co-oligomer as defined in the first aspect, or in any embodiment disclosed in relation thereto, or of a composition as defined in the third aspect or in any embodiment disclosed in relation thereto, as a coating, or in the preparation of a composite material.

In a fifth aspect, the present invention provides an article having one or more surface at least partially covered by a coating comprising an AB co-polymer or AB co-oligomer as defined in the first aspect or in any embodiment disclosed in relation thereto, or of a composition as defined in the third aspect, or in any embodiment disclosed in relation thereto.

Optionally, the article having one or more surface at least partially covered by a coating comprising an AB co-polymer or AB co-oligomer is a storage container for food, water (e.g. potable water), or other substances intended for human or animal ingestion wherein the inner (contacting) surface is coated with the coating comprising an AB co-polymer or AB co-oligomer. Optionally, the article having one or more surface at least partially covered by a coating comprising an AB co-polymer or AB co-oligomer is an article for use in food storage and/or processing, or water (e.g. potable water) storage and/or processing.

In a sixth aspect, the present invention provides a composite material comprising an AB co-polymer or AB co-oligomer as defined in the first aspect or in any embodiment disclosed in relation thereto, or of a composition as defined in the third aspect or in any embodiment disclosed in relation thereto.

In a seventh aspect, the present invention provides the use of an AB co-polymer or AB co-oligomer as defined herein to replace a bisphenol compound or a phenolic polymer in a system. As would be appreciated by the skilled person, the AB co-polymer or AB co-oligomer of the present invention share similar chemical functionality with a bisphenol compound and with a phenolic polymer. It is therefore possible to replace the use of a bisphenol compound or a phenolic polymer in a system with the AB co-polymer or AB co-oligomer. In this context, a system may, for example, be a material, a mixture of materials, an article formed therefrom, a chemical process, or a material derived therefrom.

For example, the system may be a blend of polymers, or an article made therefrom, such as a blend of a phenolic polymer and a polyester polymer, or a blend of phenolic polymer and an acrylate polymer, or a blend of phenolic polymer and a second phenolic polymer. For example, the system may be a food or potable water container or processing apparatus having a bisphenol compound or a phenolic polymer material containing component.

For example, the system may be a polymer formed from a bisphenol compound, such as a polycarbonate polymer, or a process for forming a polymer formed from a bisphenol compound, such as a polycarbonate polymer. The system may be a plastic which comprises a bisphenol compound as a plasticiser, such as bisphenol A, or a process for forming a plastic comprising a bisphenol compound, such as bisphenol A.

For example, the system may be an epoxy resin system, for example using a bisphenol compound or phenolic polymer as an epoxy resin hardener, or an epoxidated bisphenol compound or epoxidated phenolic polymer as an epoxy resin.

The invention will now be described by reference to the following non-limiting Examples.

### EXAMPLES

### EXAMPLE 1 - Preparation of a Precursor AB Co-Polymer

564 grams [2 Mol] of Phenol and 498 [1 Mol] of 1,4-bis(methoxymethyl)benzene were charged to a 2 litre, round-bottomed flask equipped with a dean and stark condenser, mechanical stirrer, addition funnel, and thermometer. The flask was configured for azeotropic reflux, the agitator started, and the contents were then heated to 60°C. Sulphuric acid was used to catalyse the reaction and the mix heated to a temperature of 115°C over a period of 1 hour.

The flask is then heated to a temperature of 120-125°C over a period of 12 hours recovering Methanol distillate. As the reaction proceeds the Methanol liberated is tapped off via the dean and stark with a light reflux return to moderate Phenol losses in the distillate. The flask is held at 120-125°C until distillation ceases.

The flask is then heated to 140°C over 45 minutes and then held at 140°C for 15 minutes. The flask is then heated to 160°C over 45 minutes and then held at 160°C for 15 minutes.

The flask is then heated to 180°C over 45 minutes and then held at 180°C for 15 minutes. The flask is then heated to 200°C over 45 minutes and then held at 200°C for 15 minutes.

The flask is then configured for direct vacuum distillation and vacuum applied whilst maintaining the temperature at 200°C to recover residual free phenol. The vacuum is increased to 28" and held for 30 minutes.

A sample was taken and evaluated for viscosity, η = 1400 mPa•s at 150°C [Cone and Plate Viscometer]. The molten solid material was then discharged and allowed to solidify at ambient temperature.

### Exemplary Structures Formed

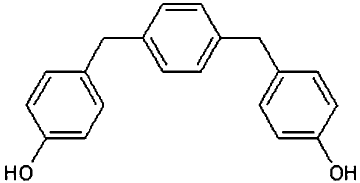

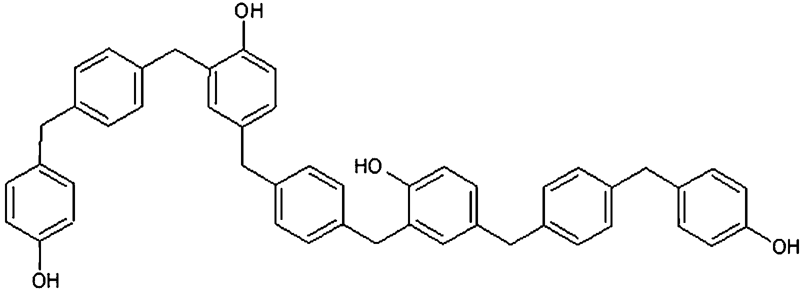

The physical properties of the intermediate prepared in Example 1 are shown below.

| **Physical test results** | | |
|---|---|---|
| Property | Result | Comments |
| Appearance | Solid | Dark colour resin |
| Viscosity at 120°C | 460 mPa•s | C&P Viscometer |

Toxicity assessment is a key part of the lacquers and coatings applied to food packaging products. Numerous tests have been questioned on ethical grounds coupled with the associated expense and time resulting in the development of new toxicology strategies employing in silico screening assessments. In silico testing utilises computer modelling of compounds based on their physicochemical properties and predicted chemical reactivity.

More and more computational models are being developed to link a particular toxicological hazard with a chemical structure. This is called Quantitative Structure-Activity Relationship Q-SAR modelling. Q-SAR modelling can be used to generate predictions and identify possible areas of concern to determine further areas worthy of investigation. These assessments use "statistical modelling" and the "expert rule-based modelling" in order to meet with the International Council for Harmonisation of Technical Requirements of Pharmaceuticals for Human Use (ICH) guidelines under ICH-M7.

Both methods try to identify structural elements/structural alerts within the molecules of interest, which may cause a mutagenic effect. The "statistical model" compares data based on defined descriptors. The results are purely data based. The "expert rule based" models are driven by the knowledge of one or multiple experts, that is, decisions are made during the evaluation process. ICH-M7 assessment using SMILES data suggested as follows for the second exemplary structure formed in Example 1.

| Smiles Notation | | | | | | |
|---|---|---|---|---|---|---|
| Oc1ccc(cc1Cc1ccc(Cc2ccc(O)c(Cc3ccc(Cc4ccc(O)cc4)cc3)c2)cc1)Cc1ccc(Cc2ccc(O) cc2)cc1 | | | | | | |
| | ICH-M7 | | | Tox Tree | | Comments |
| ENTRY | LEADSCOPE STATISTICAL MODEL * | DEREK EXPERT BASED MODEL | DEREK ICH-M7 CLASS | TTC CLASS | THRESHOLD FOR 60 KG ADULT lug/day) | |
| 1 | NEGATIVE | NEGATIVE | CLASS 5 | 90 HIGH CLASS 3 | 90 | NO STRUCTURAL ALERTS, NON-MUTAGENIC NIAS |

| LEADSCOPE STATISTICAL MODEL * | | |
|---|---|---|
| POSITIVE | POSITIVE PROBABILITY | >0.6 |
| EQUIVOCAL | POSITIVE PROBABILITY | 0.4 - 0.6 |
| NEGATIVE | POSITIVE PROBABILITY | <0.4 |

As can be seen, the exemplary structure formed in Example 1 was predicted to have a low toxicity and has been shown to lack any structural alerts and to lack any mutagenic non-intentionally added substances (NIAS).

### EXAMPLE 2 - Preparation of AB Co-Polymer/AB Co-Oligomer Wherein R = -CHR⁴-OH

444 grams [6 Mol] of n-Butanol is charged to a 2 litre, round-bottomed flask equipped with a dean and stark condenser, mechanical stirrer, addition funnel, and thermometer. The flask was configured for atmospheric reflux and 290 grams [1 Mol] of the product of Example 1 charged. The agitator started, and the contents were then heated to 118°C over 30 minutes. The contents were then held for a further 30 minutes forming a clear solution. This solution was cooled to <40°C.

164 grams [2 Mol] of formalin [≈36.5% aqueous formaldehyde solution] were charged and then 40 grams [0.32 Mol] of Caustic 70Tw [≈36.5% aqueous Sodium Hydroxide solution] charged and the flask carefully heated to 65°C and held for 4 hours. After 4 hours the flask was cooled to <40C. The flask was configured for vacuum distillation and heated to 55°C. The water of reaction was removed over a 6 hour period to a water content of <5%.

The contents were cooled, and a sample was taken and evaluated for viscosity, η = 230 mPa•s at 25°C.

### Exemplary Structure Formed

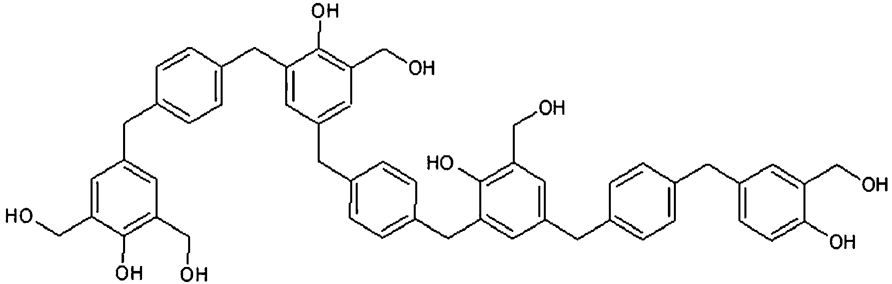

### EXAMPLE 3 - Preparation of AB Co-Polymer/AB Co-Oligomer Wherein R = -CHR⁴-Ether Group

444 grams [6 Mol] of n-Butanol is charged to a 2 litre, round-bottomed flask equipped with a dean and stark condenser, mechanical stirrer, addition funnel, and thermometer. The flask was configured for atmospheric reflux and 290 grams [1 Mol] of the product of Example 1 charged. The agitator started, and the contents were then heated to 118°C over 30 minutes. The contents were then held for a further 30 minutes forming a clear solution. This solution was cooled to <40°C.

164 grams [2 Mol] of formalin [≈36.5% aqueous formaldehyde solution] were charged and then 40 grams [0.32 Mol] of Caustic 70Tw [≈36.5% aqueous Sodium Hydroxide solution] charged and the flask carefully heated to 65°C and held for 4 hours. After 4 hours the flask was cooled to <40C and the pH was adjusted to 4.

The flask was configured for azeotropic distillation and heated to 100°C. The water of reaction was removed over an 18 period as the temperature increased to 118°C to a water content of <2%.

The contents were cooled, and a sample was taken and evaluated for viscosity, η = 490 mPa•s at 25°C.

### Exemplary Structure Formed

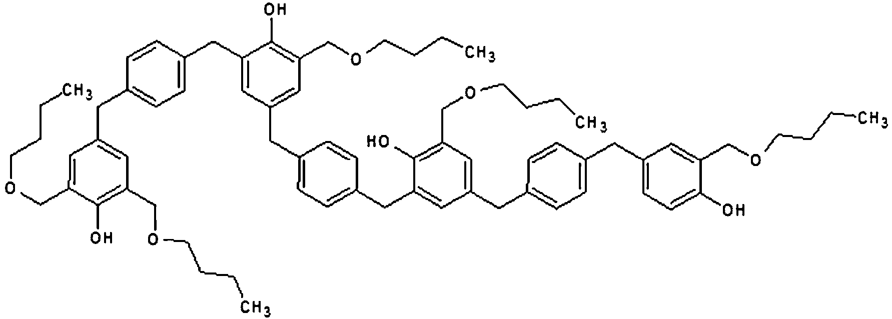

The physical properties of the intermediate are shown below.

| **Physical test results** | | |
|---|---|---|
| Property | Result | Comments |
| Appearance | Liquid | Dark coloured resin |
| Viscosity at 25°C | 490 mPa•s | C&P Viscometer |
| NVC % | 61.71 | 1gm 1 hr at 135°C |

## Claims

1. An AB co-polymer or AB co-oligomer derived from repeating units of A and B, wherein each repeating unit A is independently selected from the following structures: 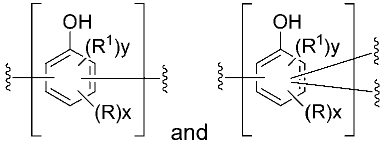
wherein repeating unit B is independently selected from the following structures: 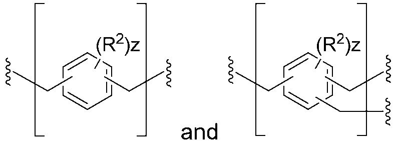
wherein:
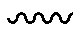 represents the point of connection to the adjacent repeating unit or to a terminal group, wherein the terminal group of repeating unit A is -H, and the terminal group of repeating unit B is -R⁵;
each R is independently selected from: -CHR⁴-OH, -CHR⁴-O-C₁ to C₂₀ alkyl, - CHR⁴-O-C₁ to C₂₀ haloalkyl, -CHR⁴-O-C₂ to C₂₀ alkenyl, -CHR⁴-O-C₂ to C₂₀ alkynyl, - CHR⁴-O-C₃ to C₂₀ cycloalkyl, -CHR⁴-O-C₄ to C₂₀ heterocycloalkyl, -CHR⁴-O-C₂ to C₂₀ alkyloxy, -CHR⁴-O-C₆ to C₁₀ aryl, -CHR⁴-O-C₃ to C₁₀ heteroaryl, -CHR⁴-O-(C₁ to C₁₀ alkyl)-(C₆ to C₁₀ aryl), -CHR⁴-O-(C₁ to C₁₀ alkenyl)-(C₆ to C₁₀ aryl), -CHR⁴-O-(C₁ to C₁₀ alkyl)-(C₃ to C₁₀ heteroaryl), -CHR⁴-O-CHR⁴-A, and -CHR⁴-O-B; wherein the C₆ to C₁₀ aryl and the C₃ to C₁₀ heteroaryl is optionally substituted;
each R¹ is independently selected from: -C₁ to C₂₀ alkyl, -C₂ to C₂₀ alkenyl, -C₂ to C₂₀ alkynyl, -C₃ to C₂₀ cycloalkyl, -C₁ to C₂₀ alkyloxy, -OR³, -NR³₂, -SR³, -CN, -NO₂, -F, - Cl, -Br, and -I;
each R² is independently selected from: -C₁ to C₂₀ alkyl, -C₂ to C₂₀ alkenyl, -C₂ to C₂₀ alkynyl, -C₃ to C₂₀ cycloalkyl, -C₁ to C₂₀ alkyloxy, -OR³, -NR³₂, -SR³, -CN, -NO₂, -F, - Cl, -Br, and -I;
each R³ is independently selected from: -H, -C₁ to C₂₀ alkyl, -C₂ to C₂₀ alkenyl, -C₂ to C₂₀ alkynyl, -C₃ to C₂₀ cycloalkyl, and -C₁ to C₂₀ alkyloxy;
each R⁴ is independently selected from: -H, -C₁ to C₂₀ alkyl, -C₂ to C₂₀ alkenyl, -C₂ to C₂₀ alkynyl, -C₃ to C₂₀ cycloalkyl, -C₃ to C₂₀ heterocycloalkyl, an optionally substituted - C₆ to C₁₀ aryl, and an optionally substituted -C₂ to C₁₀ heteroaryl;
each R⁵ is independently a suitable leaving group;
each x is independently selected from: 0, 1, and 2, with the proviso that at least one x value within the AB co-polymer or AB co-oligomer is 1 or 2;
each y is independently selected from: 0, 1, 2, and 3;
each z is independently selected from: 0, 1, 2, 3, and 4; and
wherein the AB co-polymer or AB co-oligomer comprises at least two A repeating units and at least one B repeating unit, and wherein the AB co-polymer or AB co-oligomer comprises no more than 45 A repeating units and B repeating units in total.

2. The compound of Claim 1, with the proviso that at least 25 % of the x values within the AB co-polymer or AB co-oligomer are 1 or 2; preferably with the proviso that at least 50 % of the x values within the AB co-polymer or AB co-oligomer are 1 or 2; more preferably with the proviso that at least 75 % of the x values within the AB co-polymer or AB co-oligomer are 1 or 2; most preferably wherein x is 1 or 2.

3. The compound of Claim 1 or Claim 2, wherein each R is independently selected from - CHR⁴-OH, -CHR⁴-O-Me, -CHR⁴-O-Et, -CHR⁴-O-Pr, -CHR⁴-O-Bu, -CHR⁴-O-C₅ alkyl, - CHR⁴-O-C₆ alkyl, -CHR⁴-O-C₇ alkyl, and -CHR⁴-O-C₈ alkyl.

4. The compound of any one of the preceding claims, wherein one or both of the following conditions is satisfied:
a) each R¹ is independently selected from: -C₁ to C₂₀ alkyl, -C₂ to C₂₀ alkenyl, and -OR³; wherein each R³ is independently selected from: -H, and -C₁ to C₂₀ alkyl; preferably wherein each R¹ is independently selected from: -Me, -OMe, -OH, -C₁₇ alkyl and -C₁₇ alkenyl; and/or
b) each R² is independently selected from: -C₁ to C₂₀ alkyl, -C₂ to C₂₀ alkenyl, and -OR³; wherein each R³ is independently selected from: -H, and -C₁ to C₂₀ alkyl; preferably wherein each R² is independently selected from: -Me, -OMe, and -OH.

5. The compound of any one of the preceding claims, wherein each R⁴ is independently selected from: -H, -C₁ to C₁₀ alkyl, C₆ aryl, and furanyl, preferably wherein each R⁴ is -H; and/or, wherein one or more of the following conditions is satisfied:
a) y is 0 or 1;
b) z is 0; and/or
c) the AB co-polymer or AB co-oligomer comprises no more than 40, 35, 30, 20, 15, or 10 A repeating units and B repeating units in total.

6. The compound of any one of the preceding claims, wherein each repeating unit B is bonded to 2 or 3 of repeating unit A, and is not bonded to a terminal R⁵ group; or wherein each R⁵ is independently selected from -F, -Cl, -Br, -I, -OC₁ to C₂₀ alkyl, -OC₂ to C₂₀ alkenyl, -OC₂ to C₂₀ alkynyl, -OC₃ to C₂₀ cycloalkyl, and -OC₂ to C₂₀ alkyloxy; preferably wherein each R⁵ is independently selected from -OC₁ to C₂₀ alkyl; most preferably wherein each R⁵ is -OMe.

7. The compound of any one of the preceding claims, wherein one or more of the following conditions is satisfied:
a) each R group is the same;
b) each R¹ group is the same;
c) each R² group is the same;
d) each R⁴ group is the same;
e) each R⁵ group is the same; and/or
f) wherein the repeating unit A is independently selected from the following structures: 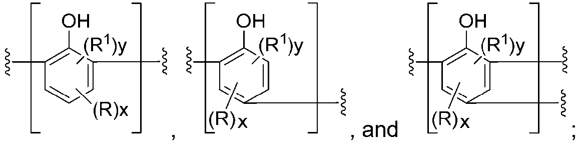
wherein x, y, R, R¹, and R³ to R⁴, are as defined in any one of the preceding claims; preferably wherein the wherein repeating unit B is independently selected from the following structures: 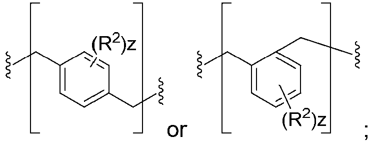
wherein z, R², R³, and R⁵, are as defined in any one of the preceding claims.

8. A method of preparing an AB co-polymer or AB co-oligomer, as defined in any one of the preceding claims, the method comprising contacting a precursor AB co-polymer or precursor AB co-oligomer with an aldehyde of formula O=CHR⁴ and either an acid or a base; wherein the precursor AB co-polymer or precursor AB co-oligomer is derived from repeating units of A1 and B, wherein repeating unit A1 is independently selected from the following structures: 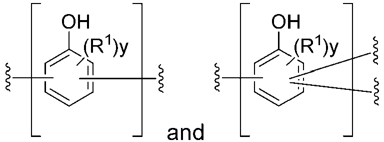
wherein 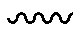 represents the point of connection to the adjacent repeating unit or to a terminal group, wherein the terminal group of repeating unit A1 is -H;
wherein the precursor AB co-polymer or precursor AB co-oligomer comprises at least two A1 repeating units and at least one B repeating unit, and wherein the precursor co-polymer or co-oligomer comprises no more than 45 A1 repeating units and B repeating units in total;
and optionally the method further comprising contacting the resulting co-polymer or co-oligomer with one or more alcohol selected from HO-C₁ to C₂₀ alkyl, HO-C₁ to C₂₀ haloalkyl, HO-C₂ to C₂₀ alkenyl, HO-C₂ to C₂₀ alkynyl, HO-C₃ to C₂₀ cycloalkyl, HO-C₃ to C₂₀ heterocycloalkyl, HO-C₂ to C₂₀ alkyloxy, HO-C₆ to C₁₀ aryl, HO-C₃ to C₁₀ heteroaryl, HO-(C₁ to C₁₀ alkyl)-(C₆ to C₁₀ aryl), HO-(C₁ to C₁₀ alkenyl)-(C₆ to C₁₀ aryl), and HO-(C₁ to C₁₀ alkyl)-(C₃ to C₁₀ heteroaryl); wherein the C₆ to C₁₀ aryl and the C₃ to C₁₀ heteroaryl is optionally substituted; and
wherein B, x, y, z, and R¹ to R⁵ are as defined in any one of Claims 1 to 7.

9. The method of Claim 8, wherein one or more of the following is satisfied:
a) preparing the AB co-polymer or AB co-oligomer takes place at at least 40 °C, preferably at least 50 °C, more preferably at least 60 °C;
b) the method comprises a base, preferably wherein the base is a hydroxide base, more preferably sodium hydroxide; and/or
c) contacting the resulting co-polymer or co-oligomer with one or more alcohol takes place at at least 70 °C, preferably at least 80 °C, more preferably at least 90 °C; and/or wherein said one or more alcohol is the solvent for the preparation of the AB co-polymer or AB co-oligomer.

10. The method of Claim 8 or Claim 9, wherein the method of preparing the precursor AB co-polymer or precursor AB co-oligomer by contacting one or more precursor of formula (1) with one or more precursor of formula (2) and preferably an acid; wherein the one or more precursor of formula (2) is independently selected from structures (2a) or (2b); 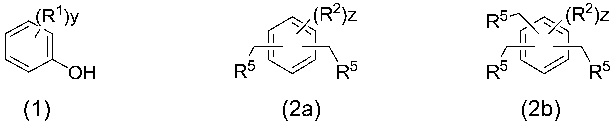 wherein y, z, R¹, R², R³, and R⁵ are as defined in any one of Claims 1 to 7; preferably wherein one or more of the following is satisfied:
a) wherein the one or more precursor of formula (2) is independently selected from structure (2a); preferably, wherein the one or more precursor of formula (2) is independently selected from structure (2ai) or (2aii): 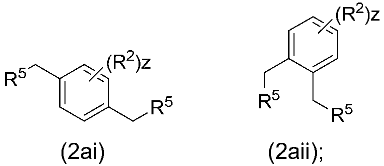
b) the molar ratio of precursor of formula (1) to the precursor of formula (2) is from 1 : 1 to 3 : 1, preferably from 1.5 : 1 to 2.5 to 1;
c) the acid is sulphuric acid; and/or
d) the preceding step of preparing the precursor AB co-polymer or precursor AB co-oligomer takes place at at least 90 °C, preferably at least 100 °C, more preferably at least 110 °C, even more preferably at least 140 °C, even more preferably at least 160 °C, even more preferably at least 180 °C, most preferably at least 200 °C.

11. A composition comprising an AB co-polymer or AB co-oligomer as defined in any one of Claims 1 to 7; preferably wherein the composition further comprises a phenolic polymer, a polyester polymer and/or an acrylate polymer, preferably wherein at least one R is other than -CHR⁴-OH.

12. Use of an AB co-polymer or AB co-oligomer as defined in any one of Claims 1 to 7, or of a composition as defined in Claim 11, as a coating, or in the preparation of a composite material.

13. An article having one or more surface at least partially covered by a coating comprising an AB co-polymer or AB co-oligomer as defined in any one of Claims 1 to 7, or a composition as defined in Claim 11.

14. A composite material comprising an AB co-polymer or AB co-oligomer as defined in any one of Claims 1 to 7, or a composition as defined in Claim 11.

15. Use of an AB co-polymer or AB co-oligomer as defined in any one of Claims 1 to 7 to replace a bisphenol compound or a phenolic polymer in a system.
